# EUROPEAN PATENT APPLICATION

(11) **EP 4 155 706 A1**
(43) Date of publication of application: **29.03.2023**
(21) Application number: 21931933.2
(22) Date of filing: 27.12.2021
(51) Int. Cl.: G01M 3/26

(54) **VEHICLE, AND GAS TIGHTNESS DETECTION METHOD FOR BATTERY PACK OF VEHICLE**

(30) Priority: 11.08.2021 CN 202110919824
(71) Applicant: Yutong Bus Co., Ltd., Zhengzhou, Henan 450061 (CN)
(72) Inventor: CHENG, Lei, Zhengzhou Henan 450061 (CN); JING, Junya, Zhengzhou Henan 450061 (CN); LIU, Yazhou, Zhengzhou Henan 450061 (CN); WANG, Yi, Zhengzhou Henan 450061 (CN); ZHAO, Hongyuan, Zhengzhou Henan 450061 (CN)
(74) Representative: Gulde & Partner
(86) International application number: PCT/CN2021/141431
(87) International publication number: WO 2023/015820

(57) **Abstract**

A vehicle and an airtightness detection method for a battery pack (1) thereof, belonging to the technical field of battery pack (1) safety. A detection port and an air inlet are arranged on the battery pack (1) of the vehicle. An air pressure detector (12) is arranged at the detection port to detect an air pressure inside the battery pack (1). The air inlet is connected to an air source (3) by an air pipeline (6). A solenoid valve (5) is arranged on the air pipeline (6). A system controller (2) controls inflation of the battery pack (1) by controlling on/off of the solenoid valve (5). During airtightness detection, the battery pack (1) is inflated so that an internal pressure thereof is greater than the atmospheric pressure. After the inflation is completed, the air pressure inside the battery pack (1) is acquired, and the airtightness of the battery pack (1) is determined according to a variation of the air pressure. The airtightness of the power battery pack (1) is detected by using the on-board apparatus, and the level of protection of the power battery pack (1) is monitored in real time during a vehicle lifecycle. In addition, the remote warning for the vehicle can be realized according to a monitoring result through a remote data center (8), which reduces the potential safety hazards for the vehicle.

## Description

### TECHNICAL FIELD

The present invention relates to a vehicle and an airtightness detection method for a battery pack thereof, belonging to the technical field of battery pack safety.

### BACKGROUND

The safety of new energy power batteries is the lifeline of new energy vehicles and the fundamental guarantee for the sustainable and healthy development of the new energy vehicle industry. The level of protection of power battery packs is an important indicator to measure the safety of the power batteries. Safety accidents such as a battery short-circuit and a vehicle fire often occur as a result of water seepage of the battery packs caused by the protection failure of the power battery packs.

Currently, the level of protection of the new energy vehicle power battery packs is usually tested by using an airtightness detection method. When a new vehicle is off an assembly line, the vehicle is inspected by a dedicated external inflation and detection device. Usually the airtightness of some high-risk vehicles is regularly inspected by after-sales service personnel with a detection device when the vehicles are not in operation during a service lifecycle of the vehicles, but it can only be detected when protection failure of the power battery packs occurs, therefore the power battery packs with the risk of protection failure cannot be warned in advance.

The current detection method has the following major problems: the specialized detection personnel need to carry a dedicated external detection device for detection. During the detection, additional compressed air is required. The pressure detection of the power battery packs by using a built-in or external single pressure sensor is easily affected by the precision of the sensor itself, resulting in inaccurate detection data. The airtightness detection of the battery packs is required to be performed when the vehicles are stopped, which affects the use and the operation of the vehicles. The battery packs can only be detected regularly by the detection personnel, the airtightness of the battery packs can only be determined according to a fixed standard, and the airtightness detection of the battery packs cannot be performed at any time.

### SUMMARY

The present invention is intended to provide a vehicle and an airtightness detection method for a battery pack thereof, so as to realize automatic detection of the airtightness of battery packs at any time to determine level of protection of the battery packs.

In order to realize the above object, the present invention provides a vehicle, including a battery pack, a system controller, and an air source. A detection port and an air inlet are arranged on the battery pack, an air pressure detector configured to detect an internal pressure of the battery pack is arranged on the detection port, the system controller is connected to the air pressure detector for sampling, the air inlet is connected to the air source by an air pipeline, a solenoid valve is arranged on the air pipeline, and the system controller is connected to the solenoid valve for control. The system controller performs instructions to implement the following airtightness detection method for the battery pack, the method including the following steps:
1) inflating the battery pack, and stopping the inflation when an air pressure inside the battery pack is greater than a set pressure, the set pressure is greater than the atmospheric pressure; and
2) acquiring a variation of the air pressure inside the battery pack after the inflation is completed, and detecting airtightness of the battery pack according to the variation of the air pressure inside the battery pack.

The detection port and the air inlet are arranged on the battery pack of the vehicle. The air pressure detector is arranged at the detection port to detect an air pressure inside the battery pack. The air inlet is connected to the air source by the air pipeline. The solenoid valve is arranged on the air pipeline. The system controller controls inflation of the battery pack by controlling on/off of the solenoid valve. During airtightness detection, the battery pack is inflated so that the internal pressure thereof is greater than the atmospheric pressure. After the inflation is completed, the air pressure inside the battery pack is acquired, and the airtightness of the battery pack is determined according to the variation of the air pressure. In the present invention, the airtightness detection with a dedicated device does not require the vehicle to stop travelling. Instead, the airtightness of the battery pack can be detected while the vehicle is travelling, and an alarm can be sent in time when the airtightness of the battery pack is poor, thereby enhancing the safety level of the vehicle during travelling.

Further, in the above vehicle, the air pressure detector includes an internal sensing terminal configured to detect the air pressure inside the battery pack and an external sensing terminal configured to detect the atmospheric pressure, and the air pressure detector calculates a difference between the air pressure inside the battery pack and the atmospheric pressure is calculated, and the difference is used as a relative pressure representing the air pressure inside the battery pack.

The integrally formed air pressure detector is used to collect the air pressures inside and outside the battery pack at the same time and calculate the relative pressure to determine the airtightness of the battery pack, the impact of the precision of the air pressure detector on the pressure detection can be eliminated, thereby enhancing the determination reliability.

The vehicle further includes an air pressure detector configured to detect the atmospheric pressure outside the battery pack, a difference between the air pressure inside the battery pack and the atmospheric pressure is calculated, and the difference is used as a relative pressure representing the air pressure inside the battery pack.

Since the air pressures inside and outside the battery pack are respectively detected by the two air pressure detectors and the relative pressures are calculated, which means that the acquired atmospheric pressure is real-time detection data rather than preset data, so the detection result is more accurate compared with that of arranging only one air pressure detector in the battery pack.

Further, in the above vehicle, an explosion relief valve configured for pressure relief is further arranged on the battery pack, and a relief pressure of the explosion relief valve is greater than a maximum pressure of the battery pack during the airtightness detection of the battery pack.

In order to prevent the battery pack from bursting due to a too high air pressure inside the battery pack, the explosion relief valve is arranged on the battery pack for pressure relief. During the airtightness detection of the battery pack, the relief pressure of the explosion relief valve is greater than the maximum pressure of the battery pack during the airtightness detection process of the battery pack, so as to prevent an inaccurate detection result due to air leakage of the explosion relief valve.

Further, in the above vehicle, a method for detecting the airtightness of the battery pack according to a variation of the air pressure inside the battery pack includes: determining that the airtightness of the battery pack fails in a case that the variation of the relative pressure within a set time period is greater than a set threshold.

The airtightness of the battery pack is determined according to the variation of the relative pressure within a time period. If the variation of the relative pressure within the set time period is greater than the set threshold, it is determined that air leakage occurs on the battery pack and the airtightness is relatively poor.

Further, in the above vehicle, the method for detecting the airtightness of the battery pack according to the variation of the air pressure inside the battery pack includes: setting a variation threshold for the relative pressure, and determining that the airtightness of the battery pack fails in a case that a time at which the relative pressure of the battery pack reaches the variation threshold is less than a set time.

The airtightness of the battery pack is determined according to the time when the relative pressure varies. If the time the relative pressure of the battery pack varies is greater than the set time, it is determined that air leakage occurs on the battery pack and the airtightness of the battery pack is relatively poor.

Further, in the above vehicle, a line of the air pressure detector is led out from the air pressure detector toward the inside of the battery pack and is connected to a terminal of a connector hermetically arranged on the battery pack, the terminal is facing into the inside of the battery pack, and a terminal of the connector facing the outside of the battery pack is connected to the air pressure detector.

Further, in the above vehicle, a pressure-limiting waterproof air inlet valve is arranged on the air inlet, and a waterproof breathable membrane is arranged at an entrance of the pressure-limiting waterproof air inlet valve.

The pressure-limiting waterproof air inlet valve can ensure that the battery pack can be inflated only when an inflation pressure reaches an opening pressure of the pressure-limiting waterproof air inlet valve. Therefore, air and impurities can be prevented from entering the battery pack as a result of unexpected air exchange between the inside and the outside of the battery pack caused by the thermal expansion and cold contraction in the outside. The waterproof breathable membrane can prevent external dust and water vapor from entering the battery pack and damaging battery pack.

Further, in the above vehicle, a pressure controller configured to adjust an inflation pressure is further arranged on the air pipeline.

The pressure controller can maintain a set inflation pressure during the inflation of the battery pack by the air source, to prevent the battery pack from being charged to explosion.

Further, in the above vehicle, the system controller stores a result of the airtightness detection as historical test data, obtains, according to the historical test data, a qualification correspondence between the relative pressure and a time required for reaching the relative pressure when the airtightness is qualified, and predicts whether the airtightness of the battery pack fails according to the qualification correspondence, where a method for the prediction includes: determining, after detecting the relative pressure of the tested battery pack, that the airtightness of the tested battery pack is qualified in a case that a time required for the tested battery pack to reach the relative pressure is greater than a time in the qualification correspondence corresponding to the same relative pressure; or otherwise, determining that the airtightness of the tested battery pack is unqualified.

The system controller stores the data and the determination result of each detection for prediction of the airtightness of the battery pack. If a risk of failure of the airtightness of the battery pack is predicted, an alarm may be sent in advance to enhance the safety level of the vehicle.

Further, in the above vehicle, a wireless communication interface is arranged on the system controller, the communication interface is configured to be connected to a remote monitoring data center, and the system controller uploads the result of the airtightness detection of the battery pack to the remote monitoring data center, and sends a failure warning for the airtightness of the battery pack through the remote monitoring data center.

The system controller may be wirelessly connected to the remote monitoring data center, send the data and the result of each airtightness detection to the remote monitoring data center. The remote monitoring data center can comprehensively analyze the airtightness detection data of a plurality of vehicles, thereby improving the accuracy of the airtightness prediction.

The present invention further provides an airtightness detection method for a battery pack of a vehicle, which adopts the above method for detecting the airtightness of the battery pack of the vehicle.

### BRIEF DESCRIPTION OF THE DRAWINGS

FIG. 1 is a schematic structural diagram of a battery pack according to the present invention.
FIG. 2 is a schematic structural diagram of an air inlet of the battery pack according to the present invention.
FIG. 3 is a flowchart of a method embodiment according to the present invention.
FIG. 4 is a schematic diagram of a pressure-time variation curve of the method embodiment according to the present invention.

In the figures, 1. Battery pack, 10. Battery pack housing, 11. Pressure-limiting waterproof air inlet valve, 111. Base of pressure-limiting waterproof air inlet valve, 112. Spring, 113. Slidable block, 114. Airflow channel, 115. Waterproof breathable membrane, 12. Air pressure detector, 13. Low-voltage connector, 2. System controller, 3. Vehicle air source, 4. Pressure controller, 5. Solenoid valve, 6. Air pipeline, 7. Communication harness, 8. Remote monitoring data center.

### DETAILED DESCRIPTION

To make the objectives, technical solutions, and advantages of the present invention clearer and more comprehensible, the following further describes the present invention in detail with reference to the accompanying drawings and embodiments.

Vehicle embodiment:
according to a vehicle of the present invention, pressures inside and outside a battery pack are simultaneously detected after the battery pack is inflated, and an air pressure difference is calculated. If a variation of the air pressure difference exceeds a threshold within a time period, the level of protection of the battery pack is determined as unqualified, and a fault alarm is sent to prompt replacement of the battery pack. In addition, whether the level of protection of the battery pack decreases during the whole lifecycle can be predicted according to the rate of air leakage in the battery pack, thereby facilitating warning in advance.

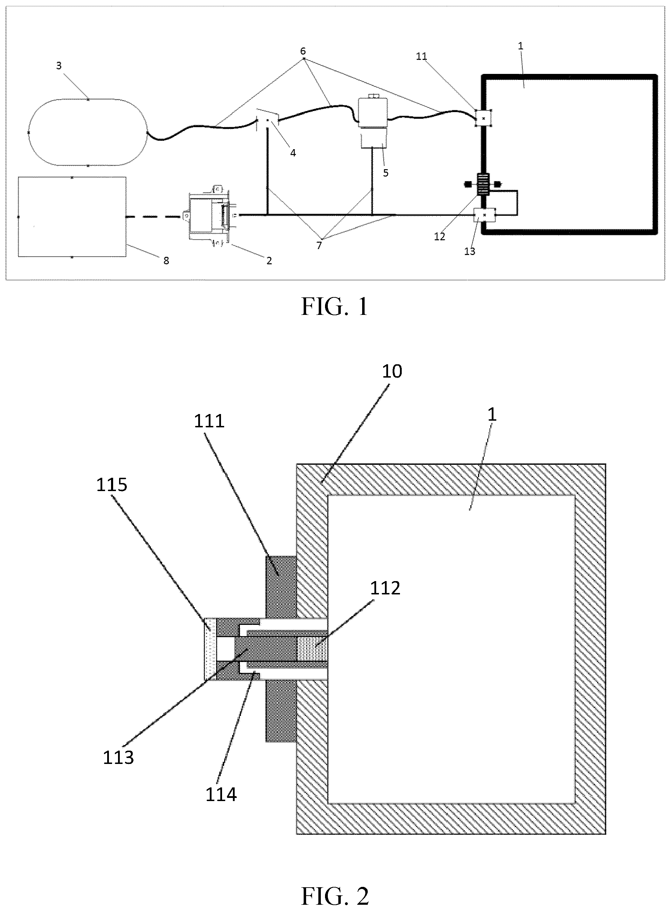

A new energy vehicle having a lithium-ion power battery pack mounted thereto is used as an example. As shown in FIG. 1, the new energy vehicle includes a battery pack 1, the battery pack 1 includes a battery body and a battery pack housing 10, and a detection port is arranged on the battery pack housing 10. The detection port is configured for an integrally internal-external formed high-precision air pressure detector 12. The air pressure detector 12 is hermetically engaged with the detection port, which conforms to the level of protection of the battery pack. In addition, the air pressure detector 12 has a detection chip and two sensing terminals. A first sensing terminal contacts the air in the battery pack and is configured to detect the air pressure inside the battery pack. A second sensing terminal contacts the atmosphere and is configured to detect the atmospheric pressure. The detection chip detects the air pressures inside and outside the battery pack at the same time, and calculates the air pressure difference. An error generated when the two sensing terminals of a same detector detect the air pressure can be eliminated during calculation of the pressure difference, which can avoid impact of the precision of the air pressure detector itself on pressure detection. A signal output terminal of the air pressure detector 12 is connected to a system controller 2 to feed back the air pressure difference between the inside and the outside of the battery pack to the system controller 2.

In other implementations, an air pressure detector may be arranged inside the battery pack to detect the air pressure inside the battery pack, and another air pressure detector may be arranged outside the battery pack to detect the atmospheric pressure outside the battery pack. A difference between the air pressure inside the battery pack and the atmospheric pressure is calculated as a relative pressure representing the internal pressure of the battery pack.

An opening for communication is further arranged on the battery pack housing 10, which is configured for a low-voltage connector 13, that is, a low-voltage electronic connector. The low-voltage connector 13 is hermetically engaged with the opening for communication, which conforms to the level of protection of the battery pack. A signal input terminal of the low-voltage connector 13 is connected to the air pressure detector 12 inside the battery pack, and a signal output terminal of the low-voltage connector 13 is connected to the system controller 2 outside the battery pack. The air pressure difference acquired by the air pressure detector 12 is fed back to the controller through the low-voltage connector 13. Since the sensing terminal of the air pressure detector 12 outside the battery pack detects only the atmospheric pressure, and the detection chip is arranged on the sensing terminal of the air pressure detector 12 inside the battery pack, therefore, a harness of the detector will also be led out through the sensing terminal of the air pressure detector 12 located in the battery pack. The purpose of this setting is that there is no need to consider the waterproof problem at the wiring of the detector (the battery pack that reaches the level of protection itself is waterproof). The harness is connected to the low-voltage connector 13 hermetically arranged on the battery pack. Through the connection to the harness outside the battery pack, the low-voltage connector 13 is connected to the system controller. If the detection chip of the air pressure detector 12 is arranged on the sensing terminal outside the battery pack, the harness is not required to be arranged inside the battery pack, and the connector is not required to be added to the battery pack. However, a possible waterproof problem at the connection between the detector and the harness is required to be resolved. Therefore, in this embodiment, the detection chip of the air pressure detector 12 is arranged inside the battery pack.

An air inlet is further arranged on the battery pack housing 10, so that a vehicle air source 3 can inflate the battery pack when the air pressure inside the battery pack is insufficient, thereby ensuring a positive pressure of the battery pack and testing the airtightness. As shown in FIG. 2 (in the figure, only the air inlet is shown, and a detection port and a communication port are not shown), a pressure-limiting waterproof air inlet valve 11 is arranged on the air inlet. A base 111 of the pressure-limiting waterproof air inlet valve 11 is snugly connected to the battery pack housing 10. A waterproof breathable membrane 115 is arranged at an entrance of the air inlet valve, to prevent external salt mist particles, dust, and water vapor from entering the battery pack. In addition, the waterproof breathable membrane 115 has a structure design of anti-mud splash, anti-touch and anti-extrusion. A spring 112 and a slidable block 113 are arranged in the air inlet valve. The spring 112 is a compression spring. In this way, when an inlet pressure reaches a specified limit, the air pushes the slidable block 113 to compress the spring 112, so that an airflow channel 114 is opened to realize inflation of the battery pack. After the inflation is completed, the system controller 2 cuts off an air pipeline 6 connecting the vehicle air source 3 to the battery pack. When the air pressure drops to be less than the specified limit, the spring 112 stretches, and pushes the slidable block 113 to reset, so that the airflow channel 114 of the battery pack 1 is closed, thereby preventing an entry of external air and impurities.

An air outlet (not shown in FIG. 2) is further arranged on the battery pack housing. An explosion relief valve is arranged on the air outlet, which can prevent the battery pack from bursting or explosion as a result of a too high air pressure inside the battery pack. In order to prevent a detection result from being affected by air leakage of the explosion relief valve during the airtightness detection of the battery pack, a relief pressure level of the explosion relief valve is greater than a maximum pressure of the battery pack could reach during the airtightness detection of the battery pack.

The above new energy vehicle further includes a system controller 2, a pressure controller 4, a solenoid valve 5 configured to control opening and closing of an air passage, and the vehicle air source 3. In this embodiment, the system controller 2 adopts a vehicle controller. In other embodiments, the system controller 2 may be a controller that is independently arranged. The system controller 2 is connected to a signal output terminal of the low-voltage connector 13 on the battery pack housing 10 by a communication harness 7 for receiving the air pressure difference between the inside and the outside of the battery pack outputted by the air pressure detector 12. The pressure controller 4 and the solenoid valve 5 are arranged on the air pipeline 6 connecting the vehicle air source 3 to the air inlet of the battery pack. In this embodiment, the pressure controller 4 adopts an electrically controlled air pressure controller. In other embodiments, a mechanical pressure-limiting valve may be used to control the air pressure of the air source of the vehicle. The pressure controller 4 and the solenoid valve 5 are connected to the system controller 2 by the communication harness 7. When the battery pack 1 is required to be inflated, the system controller 2 sends an instruction to the pressure controller 4, so that the pressure controller 4 sets a pressure level for the air from the vehicle air source 3 and controls the solenoid valve 5 to be turned on. At this time, the vehicle air source 3 can inflate the battery pack 1 with air of the set pressure. The vehicle air source 3 usually adopts compressed air or other inert gas and flame retardant gas.

The system controller 2 has a timing function, which can record a time at which the air pressure difference is sent during the airtightness detection of the battery pack 1, so as to calculate a variation rate of the air pressure difference between the inside and the outside of the battery pack within a set time. In addition, the system controller 2 is further connected to an alarm apparatus of the vehicle. The alarm apparatus is an alarm signal lamp arranged on a dashboard of the vehicle, which can send a warning signal on the dashboard of the vehicle according to the result of the airtightness detection of the battery pack, to prompt a vehicle driver to repair and maintain the battery pack in time. Alternatively, the detection data and result are uploaded to the vehicle remote monitoring data center 8 through wireless transmission, such as a satellite signal transmission, to realize real-time remote warning for the level of protection of the battery pack.

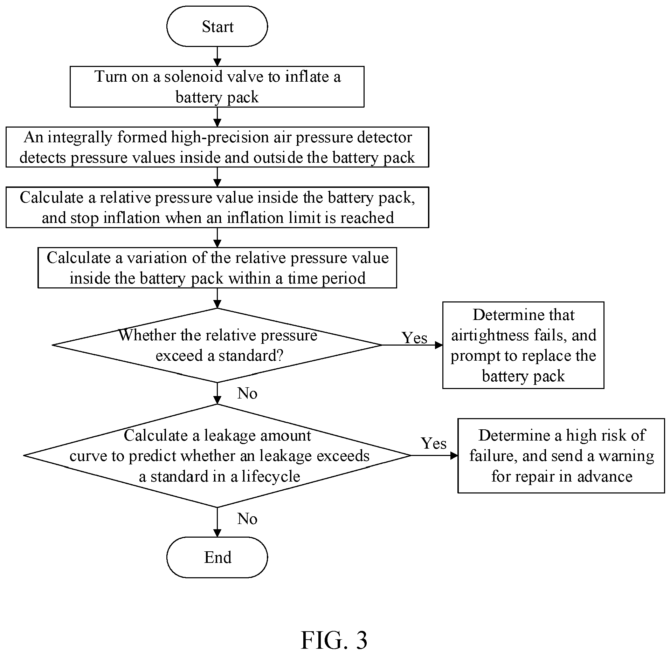

The process of detecting the airtightness of the battery pack of the new energy vehicle is shown in FIG. 3, including the following steps:
first, the system controller 2 controls the pressure controller 4 to set an inflation pressure level. When it is detected that the air pressure inside the battery pack is lower than the set value, the solenoid valve 5 is turned on, so that the vehicle air source 3 inflates the battery pack 1 to ensure that the battery pack is in a positive pressure state, that is, the air pressure inside the battery pack is greater than the atmospheric pressure. The system controller 2 may further set a frequency of inflating the battery pack according to requirements, and perform the following steps during each inflation of the battery pack.
1) During the inflation of the battery pack, the integrally internal-external formed high-precision air pressure detector detects the air pressures inside and outside the battery pack, and calculates the air pressure difference. Since the air pressure inside the battery pack is greater than the atmospheric pressure, the calculated air pressure difference is the relative pressure of the air pressure inside the battery pack higher than the atmospheric pressure. When the relative pressure reaches the set pressure for the airtightness detection, the system controller controls the solenoid valve to be turned off, to stop inflating the battery pack.
2) The system controller starts timing from the moment the system controller stops inflating the battery pack, and detects an air leakage amount in the battery pack. The air pressure detector continuously monitors the air pressure inside the battery pack and the atmospheric pressure, calculates the relative pressure, and sends the relative pressure to the system controller through the low-voltage connector when the variation of the relative pressure reaches a set variation.
3) The system controller receives the relative pressure, records a corresponding time, and determines whether the variation of the relative pressure within the set time exceeds a set threshold. Considering that some parts on the battery pack contact both the inside of the battery pack and the atmosphere, and since complete isolation between the inside of the battery pack and the atmosphere is impossible, a reasonable air loss still exists inside the battery pack. Therefore, the threshold is set.

If the variation of the relative pressure within the set time is greater than the set threshold, it is determined that additional air leakage occurs to the battery pack, the airtightness is poor, and the level of protection is unqualified.

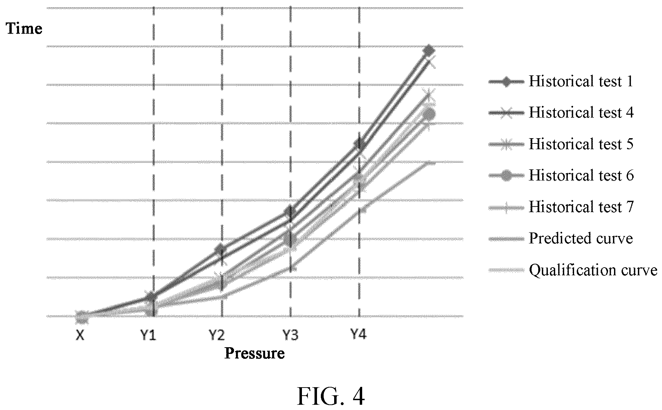

The specific method for the system controller to determine the airtightness of the battery pack based on the relative pressure includes: during the airtightness detection of the battery pack, the system controller records a time T₁₀ when the relative pressure of the battery pack after inflation reaches a set value X, records a time T₁₁ when the relative pressure drops to Y₁, records a time T₁₂ when the relative pressure drops to Y₂, successively records times T₁₁, T₁₂, T₁₃, ..., T₁ₙ when the relative pressure is Y₁, Y₂, Y₃, ..., Yₙ, and draws a time-pressure variation curve as a test curve, that is, a leakage amount curve. As shown in FIG. 4, an abscissa is the relative pressure, and an ordinate is the time corresponding to the relative pressure. The time-air pressure variation curve acquired by each airtightness detection of the battery pack is compared with a preset qualification curve. If the time corresponding to the test curve is greater than the time corresponding to the qualification curve at a same relative pressure, for example, the ordinate corresponding to the test curve is greater than the ordinate corresponding to the qualification curve in the historical test 1 in FIG. 4 with the same abscissas, it is determined that the battery pack has good airtightness and a qualified level of protection. If the time corresponding to the test curve is less than the time corresponding to the qualification curve at a same relative pressure, for example, the ordinate corresponding to the test curve is less than the ordinate corresponding to the qualification curve in the historical test 6 in FIG. 4 with the same abscissas, it is determined that the battery pack has relatively poor airtightness and the level of protection fails.

In addition, in other embodiments, the level of protection of the battery pack may be determined according to the variation of the relative pressure within the set time period. When the relative pressure of the battery pack reaches X, the relative pressure of the battery pack is acquired at an interval of a set time. If the acquired relative pressure of the battery pack is less than the set threshold, it is determined that the battery pack has relatively poor airtightness and an unqualified level of protection.

The system controller further stores the data of each airtightness detection of the battery pack as the historical test data. After sufficient historical test data is collected, a result of next airtightness detection of the battery pack may be predicted based on the historical test data.

The specific method for predicting the airtightness of the battery pack according to the historical test data includes the following: a variation trend of the relative pressure is determined according to previous test curves in the historical test data, and the airtightness of the battery pack is predicted according to the variation trend. For example, corresponding predicted times Tₘ₁, Tₘ₂, Tₘ₃, ..., Tₘₙ when the relative pressure is Y₁, Y₂, Y₃, ..., Yₙ are calculated through mathematical statistics by using the historical test data, and a predicted time-air pressure curve is drawn. Comparing the predicted curve with the qualification curve to determine whether the level of protection is at a risk of failure; if the predicted curve is lower than the qualification curve, it is determined that the level of protection may fail.

When the failure of the level of protection of the battery pack is detected or the risk of failure of the level of protection of the battery pack is predicted, the system controller sends an alarm signal on the dashboard of the vehicle to prompt the driver to repair or replace the battery pack.

Method embodiment:
An airtightness detection method for a battery pack of a vehicle in the present invention has been clearly described in the vehicle embodiment. Therefore, the details are not repeated herein.

## Claims

1. A vehicle, **characterized by** comprising a battery pack, a system controller, and an air source, wherein a detection port and an air inlet are arranged on the battery pack, an air pressure detector configured to detect an internal pressure of the battery pack is arranged on the detection port, the system controller is connected to the air pressure detector for sampling, the air inlet is connected to the air source by an air pipeline, a solenoid valve is arranged on the air pipeline, and the system controller is connected to the solenoid valve for control;
the system controller executes instructions to implement the following method for detecting airtightness of the battery pack, the method comprising the following steps:
1) inflating the battery pack, and stopping the inflation when an air pressure inside the battery pack is greater than a set pressure, the set pressure is greater than the atmospheric pressure; and
2) acquiring a variation of the air pressure inside the battery pack after the inflation is completed, and detecting airtightness of the battery pack according to the variation of the air pressure inside the battery pack.

2. The vehicle according to claim 1, **characterized in that** the air pressure detector comprises an internal sensing terminal configured to detect the air pressure inside the battery pack and an external sensing terminal configured to detect the atmospheric pressure, and the air pressure detector calculates a difference between the air pressure inside the battery pack and the atmospheric pressure is calculated, and difference is used as a relative pressure representing the air pressure inside the battery pack.

3. The vehicle according to claim 1, **characterized in that** further comprising an air pressure detector configured to detect the atmospheric pressure outside the battery pack, a difference between the air pressure inside the battery pack and the atmospheric pressure is calculated, and the difference is used as a relative pressure representing the air pressure inside the battery pack.

4. The vehicle according to claim 2 or 3, **characterized in that** an explosion relief valve configured for pressure relief is further arranged on the battery pack, and a relief pressure of the explosion relief valve is greater than a maximum pressure of the battery pack during the airtightness detection of the battery pack.

5. The vehicle according to claim 4, **characterized in that** a method for detecting the airtightness of the battery pack according to the variation of the air pressure inside the battery pack comprises: determining that the airtightness of the battery pack fails in a case that the variation of the relative pressure within a set time period is greater than a set threshold.

6. The vehicle according to claim 4, **characterized in that** a method for detecting the airtightness of the battery pack according to the variation of the air pressure inside the battery pack comprises: setting a variation threshold for the relative pressure, and determining that the airtightness of the battery pack fails in a case that a time at which the relative pressure of the battery pack reaches the variation threshold is less than a set time.

7. The vehicle according to claim 5 or 6, **characterized in that** a harness of the air pressure detector is led out from the air pressure detector toward an inside of the battery pack and is connected to a terminal of a connector hermetically arranged on the battery pack, the terminal is facing into the inside of the battery pack, and a terminal of the connector facing the outside of the battery pack is connected to the system controller.

8. The vehicle according to claim 7, **characterized in that** a pressure-limiting waterproof air inlet valve is arranged on the air inlet, and a waterproof breathable membrane is arranged at an entrance of the pressure-limiting waterproof air inlet valve.

9. The vehicle according to claim 8, **characterized in that** a pressure controller configured to adjust an inflation pressure is further arranged on the air pipeline.

10. The vehicle according to claim 9, **characterized in that** the system controller stores a result of the airtightness detection as historical test data, obtains, according to the historical test data, a qualification correspondence between the relative pressure when the airtightness is qualified and a time required for reaching the relative pressure, and predicts whether the airtightness of the battery pack fails according to the qualification correspondence, wherein a method for the prediction comprises: determining, after detecting the relative pressure of the tested battery pack, that the airtightness of the tested battery pack is qualified in a case that a time required for the tested battery pack to reach the relative pressure is greater than a time in the qualification correspondence corresponding to the same relative pressure; or otherwise, determining that the airtightness of the tested battery pack is unqualified.

11. The vehicle according to claim 10, **characterized in that** a wireless communication interface is arranged on the system controller, the communication interface is configured to be connected to a remote monitoring data center, and the system controller uploads the result of the airtightness detection of the battery pack to the remote monitoring data center, and sends a failure warning for the airtightness of the battery pack through the remote monitoring data center.

12. An airtightness detection method for a battery pack of a vehicle, **characterized in that** the method for detecting the airtightness of the battery pack of the vehicle according to any of claims 1 to 11 is adopted.
